Europäisches Patentamt

European Patent Office

Office européen des brevets

(19)

(11) **EP 1 510 942 A1**

(12) **EUROPEAN PATENT APPLICATION**

| | |
|---|---|
| (43) Date of publication:<br>**02.03.2005 Bulletin 2005/09** | (51) Int Cl.⁷: **G06F 17/30** |

(21) Application number: **03292115.7**

(22) Date of filing: **27.08.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Hewlett-Packard Development Company, L.P.**<br>**Houston, TX 77070 (US)**<br><br>(72) Inventors:<br>• **Baratange, Sebastien**<br>**38000 Grenoble (FR)** | • **Kyriakides, Lionel**<br>**38190 Brignoud (FR)**<br><br>(74) Representative: **Lloyd, Richard Graham et al**<br>**Hewlett-Packard Centre de Compétences France,**<br>**Intellectual Property Section,**<br>**Etablissement de Grenoble**<br>**38053 Grenoble Cedex 09 (FR)** |

(54) **Compatibility of tree-structured data**

(57)    A method of assessing the compatibility of a legacy data tree with a contemporary version thereof, comprising selecting a leaf from the legacy tree and establishing the existence, in the contemporary tree, of a contemporary equivalent thereof.

FIG 3

EP 1 510 942 A1

## EP 1 510 942 A1

### Description

<u>Technical Field of the Invention</u>

This invention relates, in broad terms, to the field of electronic data structures and relates, in particular (although by no means exclusively) to data hierarchies or tree structures such as are employed in electronic databases to facilitate storage and retrieval of data records.

<u>Background to the Invention and Overview of the Prior Art</u>

In the electronic world, tree structures, essentially being tangible representations of data storage and location algorithms, are used to facilitate database access by making use of repeated decision points known as nodes. In such structures, data records are stored in locations known as leaves, with the starting point of the tree-structured directory (or root) being connected to the leaves, via one or more intermediate nodes, with the maximum number of access operations being needed to reach a desired record being referred to as the depth of the tree.

In simple (e.g. binary) tree structures, each node has two children (or branches) giving a tree order of two. More complex trees exist, for example having higher orders (telecommunications message set trees may have hundreds or even thousands of nodes), although it should be understood that the present invention is not limited to any particular order of tree.

Whilst tree-structured data can offer advantages, principally in terms of expedited data retrieval, their size and structure, in real-life scenarios, can be extremely complex to manage, with changes in the hierarchical arrangements potentially leading to data processing errors, inaccessible data stores and consequential incompatibility problems with associated applications.

In an attempt to alleviate this, various naming/identification systems exist, whereby the database leaves are identified, so that an associated application may access required data on the basis of the allocated identifiers.

In some systems, "absolute long names" are used, with these being directly representative of the node path leading from the tree root to the leaf concerned. Where the database is large, these absolute long names can become very difficult to manage and keep track of.

A simpler approach uses numerical identifiers, which often simply constitute sequential numbers, ranging from one to the maximum number of leaves in the tree-structure. Thus, in the case of a binary tree having a depth of four, the eight leaves might be identified using the simple sequential digits 1 to 8.

With such identifiers in existence, an application, wishing to make use of a particular data record need only be aware of the numerical identifier to access the relevant leaf.

Whilst such approaches work well with unchanging data structures and applications, problems can arise where a legacy data tree is modified, whereby additional leaves are introduced into the hierarchy. In accordance with conventional practice, such modified leaves are renumbered with a fresh set of numerical identifiers, meaning that a given identifier, subsequent to the structure reshuffle, may not refer to the same leaf as it did beforehand.

As will be understood by those well-versed in the relevant art, this can give rise to serious data-processing errors, and a legacy application, where no modifications have been effected to take account of the altered tree structure, may then call data items using a legacy identifier set, with the retrieved data being inappropriate, incorrect or perhaps void.

It is an object of the present invention to provide a method to assess the compatibility of legacy and contemporary data trees.

<u>Summary of the Invention</u>

In accordance with a first aspect of the present invention, there is provided a method of assessing the compatibility of a legacy data tree with a contemporary version thereof, comprising selecting a leaf from the legacy tree and establishing the existence, in the contemporary tree, of a contemporary equivalent thereof.

In a preferred embodiment, the equivalent existence may be established for each leaf of the legacy tree.

The existence, in the contemporary tree, of contemporary equivalents to each said leaf may be indicative of legacy - contemporary tree compatibility.

In order to establish the equivalent existence, a comparison may be effected of the path nodes of the respective leaves.

Path nodes may be compared on the basis of their type and/or data constraints.

The absence of a match in the node comparison may be indicative of legacy - contemporary incompatibility.

Each leaf of the legacy tree may have an identifier, with any contemporary equivalents thereof being given the same identifier, in the contemporary tree.

Any leaves of the contemporary tree having no equivalent in the legacy tree may be given new identifiers, not found in the legacy tree.

In a preferred embodiment of the invented method, both the legacy and contemporary trees may be of the ASN.1 type.

In accordance with a second aspect of the present invention, there is provided a system for assessing the compatibility of a legacy data tree with a contemporary version thereof, comprising a legacy leaf selector operative to select a leaf from the legacy tree and a comparator element operative to establish the existence, in the contemporary tree, of a contemporary equivalent thereof.

The invention, in its second aspect, may comprise one or more of the features set out in the preceding paragraphs.

In accordance with a third aspect of the present invention, there is provided a system for assessing the compatibility of legacy and contemporary data trees, each relating to telecommunications message sets, comprising a legacy leaf selector operative to select a leaf from a legacy tree associated with a legacy message, and a comparator element operative to establish, in the contemporary tree, the existence of a contemporary equivalent thereof.

Any contemporary equivalents of the legacy leaves may be given the identifiers of the equivalent leaves, whereby the contemporary tree is rendered compatible with a legacy telecommunications application.

Any leaves of the contemporary tree having no equivalents in the legacy tree may be given new identifiers, not found in the legacy tree.

The invention, in its third aspect, may comprise one or more of the features set out in the preceding paragraphs.

In accordance with a fourth aspect of the present invention, there is provided a method of configuring a contemporary data tree so as to be backward-compatible with a legacy version thereof, comprising, in relation to a leaf of the legacy tree, establishing the existence or otherwise, in the contemporary tree, of a contemporary equivalent thereof.

In the event that a contemporary equivalent is found, the equivalent may be given an identifier corresponding to that of the legacy leaf.

In the event that a contemporary leaf is found not to be equivalent to any of the legacy leaves, said leaf may be given a new identifier, not found in the legacy tree.

The invention, in its fourth aspect, may comprise one or more of the features set out in the preceding paragraphs.

In accordance with a fifth aspect of the present invention, there is provided a method of assessing the compatibility of a legacy data tree and a contemporary version thereof, comprising selecting a leaf from one of said legacy or contemporary trees, and establishing the existence, in the other of said trees, of an equivalent thereof.

The invention, in its fifth aspect, may comprise one or more of the features set out in the preceding paragraphs.

Brief Description of the Drawings

Specific and non-limiting embodiments of the invention will now be described, strictly by way of example only, with reference to the accompanying drawings, of which;

FIGURE 1 illustrates, using psuedo-nomenclature, a telecoms-based data tree structure;
FIGURE 2 shows a simplified legacy ASN.1 tree structure;
FIGURE 3 shows the tree structure of FIGURE 1, in which two node names have been changed;
FIGURE 4 shows the same basic tree structure of FIGURE 1, but in which new leaves have been added; and
FIGURE 5 again shows the same basic tree structure of FIGURE 1 with an additional intermediary node having been included.

Detailed Description of the Preferred Embodiments and Best Mode of the Invention

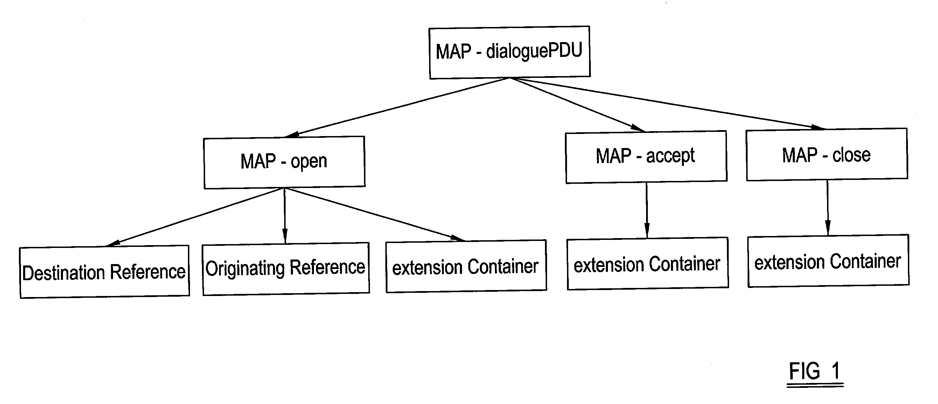

Referring first to Figure 1, a somewhat-simplified representation of a telecoms message set data tree is shown, having a root node labelled "MAP-dialoguePDU", three intermediate nodes (MAP - open, MAP - accept and MAP - close) and five leaves, labelled DestinationReference, OriginatingReference, ExtensionContainer, ExtensionContainer, and ExtensionContainer.

Although, as will be understood from those skilled in the relevant field, the terminology used in these nodes constitutes "pseudo-nomenlature", Figure 1 is intended to illustrate, in conceptual terms, the hierarchical structure of a message set data store.

In generally conventional manner, the data records themselves are stored in the lowermost leaves, with the leaves being designated using so-called "absolute long names" or abbreviated identifiers. In the present example, the first (lower left hand) leaf would be designated "MAP-dialoguePDU, MAP-open.DestinationReference" on the absolute long name basis, but would simply be allocated the numeral "1" by virtue of the abbreviated identification protocol. As will be understood, the numerical identification method is considerably simpler than the absolute long name method, as the latter can be very complicated where the tree depth becomes substantial.

In telecommunications systems, a vast number of messages are transmitted between elements of the communications infrastructure, with it thus being vital that a given communications application is able to understand - and process - message set data, rapidly and accurately.

In order to do this, it has become common practice for the communications applications to use the simplified (numerical) identifiers to identify and access particular data records, as and when that data is required. Thus, in the (simplified) present example, five numerical identifiers (1, 2, 3, 4 and 5) would be used corresponding to the DestinationReference, OriginatingReference, ExtensionContainer, ExtensionContainer, and ExtensionContainer leaves.

Where this legacy tree is invariant (i.e. has an unchanging structure) this presents few difficulties, although where the hierarchical nature of the structure is amended, perhaps by the addition of new nodes and leaves, the numerical identification sequence can change or become upset. Under these circumstances, a legacy application will be unable accurately to identify and process specific data records, with this potentially leading to data processing and communication errors.

In accordance with the preferred embodiments, a comparison and identifer-allocating algorithm is used to assess the compatibility of such a legacy tree with a contemporary (i.e. more modem, but not necessary current) version thereof.

This algorithm operates on a 2-stage basis.

First of all, a comparison is effected, whereby a check is performed on each leaf of the legacy tree, to establish whether an equivalent leaf exists in the contemporary version. In order to do this, a Boolean loop operation is required, as shown (in an exemplary manner) in the pseudo-code below.

```
Boolean legacy-leaf-found

For each leaf in legacy ASN.1 tree structure

        Legacy-leaf-found = FALSE

        For each leaf in new ASN.1 tree structure

                If legacy leaf is equivalent to new leaf

                        // The equivalent function is explicitly described later

                Then

                        Legacy-leaf-found = TRUE

                End if

        End for each leaf in new ASN.1 tree structure

        If Legacy-leaf-found is equal to FALSE

        Then

                // The current legacy leaf has no equivalent in the new

                ASN.1 tree structure
```

```
                        // The two trees are not compatible

                        Exit with status legacy and new tree are not compatible

                End If

        End for each leaf in legacy ASN.1 tree structure

        Status: the new ASN.1 tree is compatible with legacy tree structure //
```

As shown above, the check is performed, on a looped basis, on each leaf of the legacy tree structure, with the equivalence or otherwise of the legacy and contemporary leaves being established by virtue of an "equivalent function", such as that shown below, again in pseudo-code.

```
        Loop current-index from 1 to (maximum between number of nodes in
        legacy leaf path and number of nodes in new leaf path)

                        // The algorithm checks the equivalence of nodes at the
                          current index in the legacy and the new path.

                        // For this status several criteria must be fulfilled



                        // ASN.1 CHOICE case processing

                        // CHOICE (without tag) in BER [Basic Encoding Rules]
                          encoding can be ignored



                        // Choice specific test case in legacy path

                        If current-index node in legacy leaf access is a CHOICE
                        type without tag

                        Then ignore this node



                        // Choice specific test case in new path
```

*If current-index node in new leaf access is a CHOICE type without tag*

*Then ignore this node*

*// ASN.1 type and tag equivalence*

*// The check takes into account node type, node tag and ASN.1 module tagging rule*

*If the current-index legacy nodes encoding and legacy nodes encoding are different*

*Then return not equivalent status*

*// Constraint restriction checking*

*If the constraints on the current-index new node is not equivalent to legacy node*

*Then return not equivalent status*

*End loop*

*// No not equivalent status has been issued then the two leaves are compatible*

*Return status leaves are equivalent*

This pseudo-code is written on the basis that the message set tree structure is expressed using Abstract Syntax Notation. 1 (ASN.1), whereby each node in the hierarchy has a tag and a type, together (optionally) with some data constraints. To use a simplified example, a node in a order-fulfilment tree structure might take the following form.

Month:: = Integer (1..12)

Day:: = Integer (1..31)

In the example set out above, the words "Month" and "Day" constitute the names of the nodes, with "Integer" describing the type of data and the ranges (enclosed in brackets) indicating the numerical constraints with which the integers must comply.

As will be understood by those skilled in the relevant field, it can sometimes be the case that two given nodes relate to the same data type and numerical constraints, but have quite different meanings in the message set and for the recipient application.

As an example, consider the following nodes, named "Month" and "Pupil_age".

$$Month ::= Integer (1..12)$$

$$Pupil\_age ::= [0] Integer (1..12)$$

The two nodes both have Integer constraints between 1 and 12, but Month and Pupil_age do not have an equivalent meaning in the message (and of course for the application). In view of this, ASN.1 provides a tag notation (which is the [0]), that allows the two Integers to be distinguished. Thus, for two nodes to be equivalent, the legacy and new couple (node type and node tag) have also to be equivalent.

In other words, where nodes have identical data types and data constraints, ASN.1 tags may be used to differentiate between them, to avoid data processing errors which might otherwise occur. Clearly, where an application needs to make use of (and process) "Pupil_age" data, erroneous use of "Month" data could lead to serious miscalculations.

In order to establish that a given legacy leaf is equivalent to a contemporary leaf contained within a contemporary version of the legacy tree structure, each node of the legacy/contemporary leaf access paths are compared, by looking at the node types and tags, as shown in the pseudo-code. Where it is found that the types are not the same, a "not equivalent" status is returned for the node concerned. Similarly, where the tags of the legacy and contemporary nodes differ, a "not equivalent" status is returned.

As shown towards the end of the equivalent function pseudo-code, only where no "not equivalent" status reports have been dispatched will the two leaves be declared compatible; in other words, if any one of the various tests fails, the legacy and contemporary trees will be declared incompatible on the basis that at least one of the legacy leaves has no equivalent in the contemporary version.

As shown in the pseudo-code, a check is also made on any data constraints that may apply to the various nodes. Only where the constraints on the legacy node are equivalent will an equivalent node status be declared. Were that not the case, an application might seek to retrieve data from a given node that fell outside the constraint range of the node concerned. This, also, could lead to processing and calculation errors.

Where it is found that the legacy leaves have equivalents in the contemporary tree structure, the same numerical identifier is allocated to the new tree structure leaf, as shown in the following pseudo-code:

*Constant   Integer   maximum-identifier-value-in-legacy-ASN.1-tree-structure*

*Integer current-identifer-value-in-new-ASN.1-tree-structure*

*Current-identifier-value-in-new-ASN.1-tree-structure    is    equal    to maximum-identifier-value-in-legacy-ASN.1-tree-structure*

*For each leaf in new ASN.1 tree structure*

    *Current-leaf-in-new-tree-identifier = NONE*

    *For each leaf in legacy ASN.1 tree structure*

        *If legacy leaf is equivalent to new leaf*

            *// The equivalent function is described above*

        *Then*

            *// The same leaf has been found in both legacy and new ASN.1 tree structure*

            *// The same identifier is allocated to the new ASN.1 tree structure leaf*

            *Current-leaf-in-new-tree-identifer  =  legacy-leaf-identifier*

            *Leave For each loop*

        *End if*

    *End for each leaf in legacy ASN.1 tree structure*

    *If current-leaf-in-new-tree-identifier is equal to NONE*

    *Then*

        *// This is a new leaf that can not be found in legacy ASN.1 tree structure*

        *// a new identifier (unused) is allocated.*

        *Current-leaf-in-new-tree-identifier  =  current-identifier-value-in-new-ASN.1-tree-strcture*

        *Increment  by  1  the  variable  current-identifier-value-in-new-ASN.1-tree-structure*

*End if*

*End for each leaf in new ASN.1 tree structure*

As will be understood, where new leaves exist that do not have any equivalent in the legacy structure, a new (hitherto unused) numerical identifier is allocated to each such leaf, with it then being necessary to convey this new identification information to any associated applications so that they may make appropriate and accurate data calls on the information provided at the new leaves.

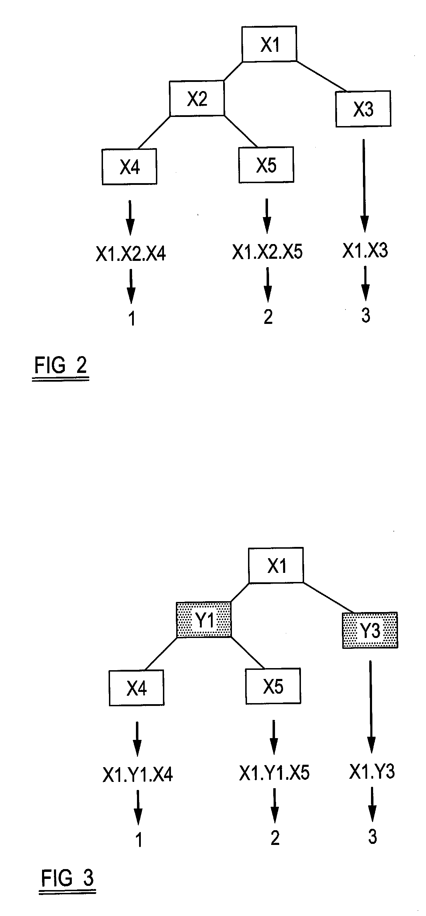

Figures 2, 3, 4 and 5 illustrate, on a graphical basis, how evolution of a data tree can result in altered tree structures, with the "equivalent function" of the above-described algorithm being used to assess the compatibility of the original (legacy) tree and three evolved variants thereof.

Figure 2, representing a legacy ASN.1 tree structure, shows a five node structure having a root X1, and three leaves X4, X5 and X3. The "absolute long names" of these leaves are X1.X2.X4, X1.X2.X5 and X1.X3, with the abbreviated numerical identifiers 1, 2 and 3 being used to represent them, in generally conventional manner.

Figure 3 shows the result of renaming nodes X2 and X3, to Y1 and Y3. Evidently, this affects the absolutes long names, although where the node characteristics of Y1 and Y3 (tag, type and constraint) are identical to those of the previously-existing nodes X2 and X3, the behaviour of the tree shown in Figure 3 is identical to that of Figure 2. As the algorithm would thus indicate that the nodes are equivalent, the amended (contemporary) tree is found to be compatible with the legacy tree, with the three identifiers (1, 2 and 3) thus being given to the three "new" leaves of the contemporary tree.

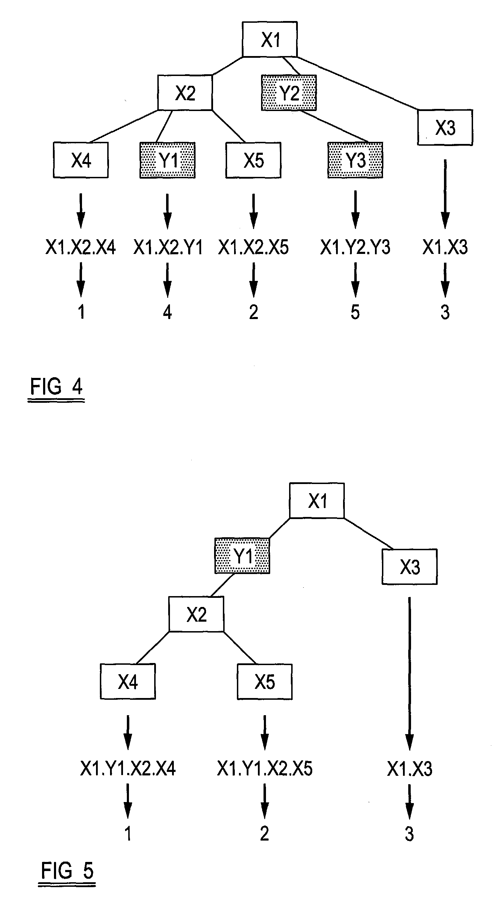

Figure 4 shows the effect of the addition of new nodes Y1, Y2 and Y3, with the result being the addition of new leaves Y1 and Y3, with the existing leaves X4, X5 and X3 remaining unchanged, with their root to leaf pathways also not being affected. In view of this, the algorithm will establish that each leaf of the legacy tree can be found in the contemporary version, with the "original" leaves X4, X5 and X3 being allocated their original identifiers 1, 2 and 3. The new leaves Y1 and Y3, having no equivalents in the legacy tree, are given new sequential identifiers 4 and 5.

Looking lastly at Figure 5, this illustrates the effect of the addition of an intermediary node, between nodes X1 and X2 of the legacy tree. This affects the absolute long names of the first two legacy leaves, but does not affect the essence of these leaves, where the additional node (Y1) is a "choice" node. This is because a "choice" node does not alter the meaning of the ultimate leaf - it merely acts as a gateway to that leaf.

As will be apparent from a thorough reading of the foregoing description, the method and system described allows a ready comparison of legacy and contemporary data trees to be effected and for an appropriate identifier numbering system to be applied to the leaves of the contemporary tree. As tree structures (in particular, those described using ASN.1) are commonly-used in the telecommunications field, this allows a telecommunications service running, for example, in the HP "Open Call Service Controller" (OC-SC) platform to be source and binary compatible (i.e. it does not need to be recompiled), where the message set library (i.e. legacy tree structure) has evolved in a "backward-compatible" manner, in that the evolved version is compatible with the original (legacy) tree.

It will be understood that this is important, as, in the telecommunications world, a very complex (and expensive) area is the definition, creation and testing of specific telecommunications services. Thus, once a particular service (for example a "pre-paid" mobile billing service) is validated (i.e. the operational tests have been completed satisfactorily), service operators are likely to be reluctant to modify any aspect of the service. In hand with its own internal logic, the service will make use of a particular message set in order to transmit messages to other network elements in the telecommunications infrastructure. This might include, for example, the transmission of a message to debit a particular user's pre-paid account by a given amount of money. If, for example, it is agreed that a particular leaf (say leaf 33) of the data structure is to be the node that contains the amount of money, by which the pre-paid account should be debited, and that leaf 34 should include the user's account number, it is clearly important that the various applications are kept aware of this, to avoid any data-processing problems. Thus, if an API (Application Programming Interface) is offered, on the basis that whatever message set is used, leaf 33 will be the amount by which the account should be debited and leaf 34 will relate to the user's account number, a telecommunications operator service will be able to use, in its source code, the values 33 and 34 without fear of any data-processing errors.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

**Claims**

1. A method of assessing the compatibility of a legacy data tree with a contemporary version thereof, comprising selecting a leaf from the legacy tree and establishing the existence, in the contemporary tree, of a contemporary equivalent thereof.

2. A method according to claim 1 wherein the equivalent existence is established for each leaf of the legacy tree.

3. A method according to claim 1 wherein the existence, in the contemporary tree, of contemporary equivalents to each said leaf is indicative of legacy-contemporary tree compatibility.

4. A method according to claim1, claim 2 or claim 3 wherein the equivalent existence is established by comparing the path nodes of the respective leaves.

5. A method according to claim 4 wherein the path nodes are compared on the basis of their type.

6. A method according to claim 4 or claim 5 wherein the path nodes are compared on the basis of their data constraints.

7. A method according to claim 4, claim 5 or claim 6 wherein the absence of a match in the node comparison step is indicative of legacy-contemporary incompatibility.

8. A method according to any one of the preceding claims wherein each leaf of the legacy tree has an identifier and wherein any contemporary equivalents thereof are given the same identifier in the contemporary tree.

9. A method according to claim 8 wherein any leaves of the contemporary tree having no equivalents in the legacy tree are given new identifiers, not found in the legacy tree.

10. A method according to any one of the preceding claims wherein the legacy and contemporary trees are of the ASN.1 type.

11. A system for assessing the compatibility of a legacy data tree with a contemporary version thereof, comprising a legacy leaf selector operative to select a leaf from the legacy tree and a comparator element operative to establish the existence, in the contemporary tree, of a contemporary equivalent thereof.

12. A system for assessing the compatibility of legacy and contemporary data trees, each relating to telecommunications message sets, comprising a legacy leaf selector operative to select a leaf from a legacy tree associated with a legacy message, and a comparator element operative to establish, in the contemporary tree, the existence of a contemporary equivalent thereof.

13. A system according to claim 12 wherein any contemporary equivalents of the legacy leaves are given the identifiers of the equivalent leaves, whereby the contemporary tree is rendered compatible with a legacy telecommunications application.

14. A system according to claim 12 or claim 13 wherein any leaves of the contemporary tree having no equivalents in the legacy tree are given new identifiers, not found in the legacy tree.

15. A method of configuring a contemporary data tree so as to be backward-compatible with a legacy version thereof, comprising, in relation to a leaf of the legacy tree, establishing the existence or otherwise, in the contemporary tree, of a contemporary equivalent thereof.

16. A method according to claim 15 wherein, in the event that a contemporary equivalent is found, the equivalent is given an identifier corresponding to that of the legacy leaf.

17. A method according to claim 15 or 16 wherein, in the event that a contemporary leaf is found not to be equivalent to any of the legacy leaves, said leaf is given a new identifier, not found in the legacy tree.

18. A method of assessing the compatibility of a legacy data tree and a contemporary version thereof, comprising selecting a leaf from one of said legacy or contemporary trees, and establishing the existence, in the other of said trees, of an equivalent thereof.

19. A method according to claim 18 further comprising any one of the features described in claims 1 to 17.

EP 1 510 942 A1

```
                        ┌─────────────────────┐
                        │  MAP - dialoguePDU  │
                        └─────────────────────┘
```

MAP - dialoguePDU

MAP - open          MAP - accept          MAP - close

Destination Reference     Originating Reference     extension Container     extension Container     extension Container

FIG 1

FIG 2

FIG 3

FIG 4

FIG 5

**European Patent Office**

**EUROPEAN SEARCH REPORT**

Application Number

EP 03 29 2115

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CHAWATHE S S ET AL: "Change detection in hierarchically structured information" SIGMOD RECORD, SIGMOD, NEW YORK, NY, US, 4 June 1996 (1996-06-04), pages 1-31, XP002169387 ISSN: 0163-5808 * the whole document * --- | 1-19 | G06F17/30 |
| X | US 2002/184252 A1 (BALASUBRAMANIAN VIJAY ET AL) 5 December 2002 (2002-12-05) * the whole document * --- | 1-19 | |
| X | US 2002/055932 A1 (RIPLEY JOHN R ET AL) 9 May 2002 (2002-05-09) * the whole document * ----- | 1-19 | |

TECHNICAL FIELDS SEARCHED (Int.Cl.7)

G06F

The present search report has been drawn up for all claims

| Place of search | Date of completion of the search | Examiner |
|---|---|---|
| MUNICH | 11 February 2004 | Hauck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 03 29 2115

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2004

| Patent document cited in search report | Publication date | Patent family member(s) | Publication date |
|---|---|---|---|
| US 2002184252 A1 | 05-12-2002 | EP 1265155 A2 | 11-12-2002 |
| US 2002055932 A1 | 09-05-2002 | AU 8111101 A | 18-02-2002 |
| | | CA 2417763 A1 | 14-02-2002 |
| | | EP 1317715 A1 | 11-06-2003 |
| | | WO 0213049 A1 | 14-02-2002 |

EPO FORM P0459

For more details about this annex : see Official Journal of the European Patent Office, No. 12/82